Europäisches Patentamt

European Patent Office

Office européen des brevets

(19)

(11) Veröffentlichungsnummer: **0 293 648 B1**

(12) **EUROPÄISCHE PATENTSCHRIFT**

(45) Veröffentlichungstag der Patentschrift:
27.12.90

(21) Anmeldenummer: 88107597.2

(22) Anmeldetag: 11.05.88

(51) Int. Cl.⁵: **E01D 19/04,** B21K 1/02,
B21K 25/00, E04B 1/36,
F16C 33/34

(54) Rollenlager für Bauwerke, insbesondere Brücken.

(30) Priorität: 18.05.87 DE 3716582

(43) Veröffentlichungstag der Anmeldung:
07.12.88 Patentblatt 88/49

(45) Bekanntmachung des Hinweises auf die Patenterteilung:
27.12.90 Patentblatt 90/52

(84) Benannte Vertragsstaaten:
AT CH FR IT LI SE

(56) Entgegenhaltungen:
EP-A- 0 052 092
EP-A- 0 074 347
DE-A- 1 802 430
DE-B- 1 024 108
DE-B- 1 078 155
FR-A- 696 855
FR-A- 1 555 179
FR-A- 2 359 655
GB-A- 371 226

(73) Patentinhaber: Schwäbische Hüttenwerke Gesellschaft
mit beschränkter Haftung,
Wilhelmstrasse 67 Postfach 3280,
D-7080 Aalen-Wasseralfingen(DE)

(72) Erfinder: Bayer, Karl, In der Reute 15,
D-7151 Grosserlach(DE)

(74) Vertreter: Allgeier, Kurt, Postfach 14 27,
D-7888 Rheinfelden(DE)

**Beschreibung**

Die Erfindung bezieht sich auf ein Rollenlager für Bauwerke, insbesondere Brücken, bestehend aus einer oder mehreren zylindrischen Rollen, die zwischen den planparallelen Flächen einer oberen und unteren Lagerplatte innerhalb eines begrenzten Wälzbereichs abrollen.

Lager dieser Art sind für Bauwerke, insbesondere Brücken geeignet, die einer Relativverschiebung gegenüber ihren Pfeilern, Widerlagern oder Fundamenten, d. h. den ortsfesten Lagerstellen ausgesetzt sind. Derartige Rollenlager ermöglichen eine geradlinige Bewegung des aufliegenden Baukörpers dadurch, daß eine oder mehrere zylindrische Rollen zwischen den planparallelen Flächen der oberen und der unteren Lagerplatte abrollen können. Bei Ausführungen des Lagers mit nur einer Rolle sind auch Kippbewegungen um die Rollenachse möglich. Ferner können auch quer zur Bewegungsrichtung wirkende Horizontalkräfte übertragen werden, wenn in den Lagerplatten Führungsleisten eingelassen sind, welche in eine Nut in der Rollenmitte eingreifen.

Die Lagerrollen und Lagerplatten wurden zunächst aus Maschinenbaustahl (St. 50.2 oder St. 52.3 nach DIN 17100) hergestellt. Lager aus diesem Stahl können mit einer Hertzpressung bis ca. 1100 N/mm² (DIN 1073) belastet werden.

Es bestand das Bestreben, die Belastbarkeit dieser Rollenlager zu erhöhen. Dies wurde erreicht durch Panzerung der Rolle und der Lagerplatten im Wälzbereich mittels einer auftragsgeschweißten Hartstahlschicht. Dadurch konnte die zulässige Hertzpressung bis auf 2000 N/mm² gesteigert werden (DE-AS 10 78 155).

Eine weitere Steigerung der Belastbarkeit bis zu 2500 N/mm² Hertzpressung wurde schließlich dadurch erzielt, daß man die Rollen und den Wälzbereich der Lagerplatten aus legiertem Edelstahl, z. B. X 40 Cr 13 herstellte. Rollenlager dieser Bauart wurden in den letzten 10 bis 15 Jahren in großem Umfang vor allem in Brückenbauwerken eingesetzt.

In letzter Zeit haben sich an diesen Edelstahl-Lagern in auffälligem Umfang Schäden in Form von Rissen im Wälzbereich gezeigt, die zur Zerstörung der Wälzflächen führten. Dadurch wurden diese Lager funktionsunfähig und mußten ausgetauscht werden.

Diese Risse im Wälz- und Kantenbereich der Rollen und der Lagerplatten können auf die starken Temperaturschwankungen, denen die Lager ausgesetzt sind und dadurch bedingt die wegen der Temperaturempfindlichkeit aufgetretenen Alterungserscheinungen zurückgeführt werden. Wegen der Kantenpressungsempfindlichkeit dieser Werkstoffe können diese Risse auch als Folge von Fundament- oder Pfeilerverlagerungen, z. B. bei Brücken oder von Mängeln beim Einbau der Lager auftreten.

Bei diesen hochbelastbaren Lagern macht nun der Austausch gegen gleichhoch belastbare Rollenlager Schwierigkeiten, weil derartige Lager mit geringerer Empfindlichkeit gegen große Temperaturbeanspruchung, Kantenpressung und Alterung bisher nicht bekannt sind. Der Einbau von Rollenlagern älterer Bauart aus unempfindlicheren Werkstoffen mit geringerer Tragkraft verbietet sich wegen der zur Verfügung stehenden Einbaumaße, die konstruktiv vorgegeben sind, weil wegen der kleineren zulässigen Hertzpressungen größere Einbaumaße benötigt würden.

Es besteht daher die Aufgabe, ein Rollenlager zu schaffen, bei dem die geschilderten Mängel nicht auftreten, und welches die bekannten Lager mit übereinstimmenden Einbaumaßen und wenigstens gleichhoher Tragkraft zu ersetzen vermag.

Zur Lösung dieser Aufgabe führt die Maßnahme, daß die Rollen und die Wälzbereiche der Lagerplatten aus einem Werkstoffverbund bestehen, der durch warmes Aufschmieden einer Arbeitsschicht aus legiertem Edelstahl auf einen Grundwerkstoff aus Maschinenbaustahl gebildet und nach dem Härten und Vergüten geschliffen ist.

Zweckmäßigerweise besteht der Grundwerkstoff aus einem Maschinenbaustahl, beispielsweise St. 52.3 und die Arbeitsschicht aus einem hochlegierten Edelstahl, beispielsweise X 40 Cr 13.

Eine besondere Ausführungsform ist gekennzeichnet durch eine durch Verschmieden hergestellte intermetallische Verbindung zwischen einer Rolle aus einem Maschinenbaustahl und einer aufgeschrumpften Hülse aus dem legierten Edelstahl, die gehärtet, vergütet und geschliffen ist.

Bei der Herstellung der Rolle wird zunächst auf den Grundkörper aus Maschinenbaustahl die Wälzschicht als zylindrische Hülse aufgeschrumpft und darauf werden Grundkörper und Hülse miteinander verschmiedet, so daß eine unlösbare intermetallische Verbindung der beiden unterschiedlichen Werkstoffe im Grenzbereich geschaffen wird. Diese Verbindung ist einer Auftragsschweißung wegen ihrer größeren Homogenität und ihrem besseren kristallinen Gefüge überlegen. Auch die Wälzfläche der Lagerplatten wird im Schmiedeverfahren mit dem Grundmaterial intermetallisch verbunden. Durch die Anwendung dieses Verbindungsverfahrens bei dem Rollenlager wird die Temperatur- und die Empfindlichkeit gegen Kantenpressung der Lager dieser Bauart beseitigt und dadurch deren Betriebssicherheit und Lebensdauer entscheidend erhöht.

Ein weiterer Vorteil dieser Ausbildung des Rollenlagers besteht darin, daß im Gegensatz zu den bekannten Lagerbauarten mit auftragsgeschweißten Hartstahlschichten wegen der Rundum-Arbeitsschicht der Rollen der Wälzbereich vergrößert, ja praktisch nur durch die Größe des Wälzbereichs der Lagerplatten begrenzt ist.

Die wesentlichen Merkmale und Einzelheiten der Erfindung sind anhand eines Ausführungsbeispiels in der Zeichnung dargestellt und im folgenden näher erläutert. Es zeigt

Fig. 1 einen vertikalen Querschnitt durch einen Ausschnitt aus einem Rollenlager, wie es in
Fig. 2 schematisch dargestellt ist.

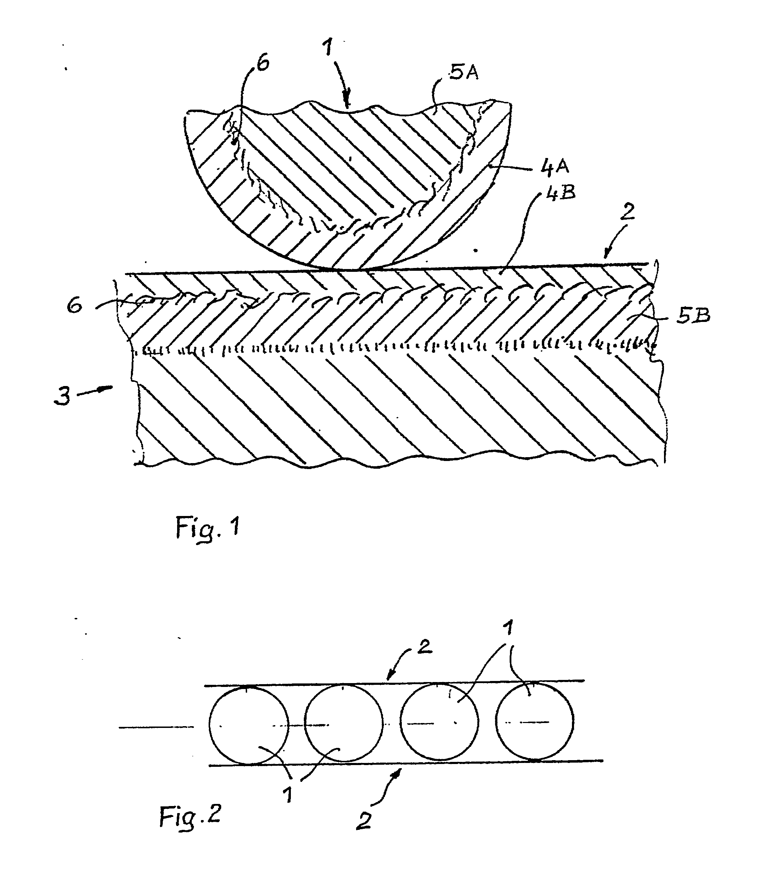

In den Fig. sind die Rollen mit 1 und die Lagerplatten mit 2 bezeichnet. In Fig. 1 besteht der Kern 5A der Rolle 1 aus einem Maschinenbaustahl, z. B. St.

52.3 nach DIN 17100. Der Kern 5A ist umschlossen von daraufgeschrumpften Hülse 4A aus X 40 Cr 13. Zwischen dieser und dem Grundwerkstoff des Kerns ist durch Verschmieden eine intermetallische Verbindung 6 hergestellt. Durch dieses Verschmieden wird nicht nur eine innige, hochfeste Verbindung geschaffen, deren Belastbarkeit höher als die zulässige Hertzpressung liegt, sondern darüber hinaus wird durch den Verschmiedungsprozeß die Empfindlichkeit gegen Rißbildung infolge Kantenpressung des hochlegierten Edelstahls der Hülse 4A deutlich gemindert.

Auf ähnliche Weise wird auch die Armierung der Lagerplatte hergestellt. Mit einem Grundwerkstoff 3 der Lagerplatte 2 aus einfachem Maschinenbaustahl ist eine Zwischenschicht 5B aus z. B. St. 52.3 aufgebracht, die unter Bildung einer intermetallischen Verbindung 6 mit der Arbeitsschicht 4B aus dem hochlegierten Edelstahl X 40 C 13 verschmiedet ist. Abweichend von der Gestaltung des Ausführungsbeispiels kann die Lagerplatte 2 auch aus einem einheitlichen Grundwerkstoff, z. B. aus St. 52.3 bestehen. Auch hier gilt das Obengesagte, daß durch den Verschmiedungsprozeß vor allem die Belastbarkeit der Lagerplatten 2 und die Unempfindlichkeit gegen Rißbildungen infolge von Kantenpressung erheblich gesteigert wird.

## Patentansprüche

1. Rollenlager für Bauwerke, insbesondere Brücken, bestehend aus einer oder mehreren zylindrischen Rollen (1), die zwischen den planparallelen Flächen einer oberen und unteren Lagerplatte (2) innerhalb eines begrenzten Wälzbereichs abrollen, dadurch gekennzeichnet, daß die Rollen (1) und die Wälzbereiche der Lagerplatten (2) aus einem Werkstoffverbund (6) bestehen, der durch warmes Aufschmieden einer Arbeitsschicht (4A, B) aus legiertem Edelstahl auf einen Grundwerkstoff aus Maschinenbaustahl (5A, B) gebildet und nach dem Härten und Vergüten geschliffen ist.

2. Rollenlager nach Anspruch 1, dadurch gekennzeichnet, daß der Grundwerkstoff (5A, B) aus St. 52.3 und die Arbeitsschicht (4A, B) aus X 40 Cr 13 besteht.

3. Rollenlager nach Anspruch 1, gekennzeichnet durch eine durch Verschmieden hergestellte intermetallische Verbindung (6) zwischen einer Rolle (1) aus einem Maschinenbaustahl (5A) und einer aufgeschrumpften Hülse (4A) aus einem legierten Edelstahl, die gehärtet, vergütet und geschliffen ist.

4. Rollenlager nach Anspruch 1, gekennzeichnet durch eine durch Verschmieden hergestellte intermetallische Verbindung (6) zwischen den Lagerplatten (2) aus Maschinenbaustahl (5B) und den Arbeitsplatten (4B) aus einem legierten Edelstahl, die gehärtet, vergütet und geschliffen sind.

## Claims

1. Roller bearing for building structures, in particular for bridges, comprising a single or several cylindrical rollers (1) which operate, with in a limited rolling range, between the plane-parallel surfaces of an upper and a lower bearing plate, characterized in that the rollers (1) and the rolling ranges of the bearing plates (2) consist of a composite material (6), obtained by hot forging a working layer (4 A, B) of alloyed special steel onto a basic material (5 A, B) of engineering steel, which has been ground afterhardening, quenching and tempering.

2. Roller bearing acc. to claim 1, characterized in that the basic material (5 A, B) consists of St. 52.3 and the working layer (4 A, B) of X 40 Cr 13,

3. Roller bearing acc. to claim 1, characterized by an intermetallic composite (6), achieved by forging, between a roller (1) of engineering steel (5 A) and a bush (4A) of a alloyed special steel which has been shrunk on, hardened, quenched, tempered and ground.

4. Roller bearing acc. to claim 1, characterized by an intermetallic composite (6), achieved by forging, between the bearing plates (2) of engineering steel (5 B) and the working plates (4 B) of alloyed special steel, which have been hardened, quenched, tempered and ground.

## Revendications

1. Appui à rouleaux pour constructions, en particulier pour ponts, comportant un seul ou plusieurs rouleaux cylindriques (1) qui se déroulent dans un domaine de fonctionnement limité, entre les faces planes et parallèles d'une plaque d'appui (2) supérieure et d'une plaque d'appui (2) inférieure, dûment caractérisé par ce que les rouleaux (1) et les domaines de fonctionnement des plaques d'appui (2) consistent en un matériau composé (6) obtenu par forgeage à chaud d'une couche de travail (4A, B) d'acier spécial allié sur un matériau de base d'acier pour constructions mécaniques (5A, B), matériau composé a été rectifié après sa trempe et son traitement thermique.

2. Appui à rouleaux selon revendication 1, dûment caractérisé par ce que le matériau de base (5A, B) consiste en St. 52.3 et la couche de travail (4A, B) en X 40 Cr 13.

3. Appui à rouleaux selon revendication 1, dûment caractérisé par une combinaison intermétallique (6) par corroyage entre un rouleau (1), fabriqué d'acier pour constructions mécaniques (5A), et une douille (4A) d'acier spécial allié mise à chaud, trempée, traitée et rectifiée.

4. Appui à rouleaux selon revendication 1, dûment caractérisé7z par une combinaison intermétallique (6) réalisée par corroyage entre les plaques d'appui (2) d'acier pour constructions mécaniques (5B) et les plaques de fonctionnement (4B) d'acier spécial allié qui ont été trempées, traitées et rectifiées.

Fig. 1

Fig. 2